# EUROPÄISCHE PATENTSCHRIFT

(11) **EP 2 054 655 B1**
(45) Veröffentlichungstag und Bekanntmachung des Hinweises auf die Patenterteilung: **31.03.2010**
(21) Anmeldenummer: 07788032.6
(22) Anmeldetag: 30.07.2007
(51) Int. Cl.: F16K 27/02, F16K 1/22, F02D 9/10, F16K 1/228

(54) **SCHALTVENTIL ZUM STEUERN EINER GASSTRÖMUNG**
CONTROL VALVE FOR CONTROLLING A GAS FLOW
SOUPAPE DE COMMANDE POUR COMMANDER UN ÉCOULEMENT DE GAZ

(30) Priorität: 25.08.2006 DE 102006039827
(43) Veröffentlichungstag der Anmeldung: 06.05.2009
(73) Patentinhaber: MAHLE International GmbH, 70376 Stuttgart (DE)
(72) Erfinder: ELSÄSSER, Alfred, 75210 Keltern (DE); GOMMEL, Achim, Simmozheim, 75397 (DE); HANSLIK, Karl-Heinz, Stuttgart, 70329 (DE)
(74) Vertreter: BRP Renaud & Partner
(86) Internationale Anmeldenummer: PCT/EP2007/057828
(87) Internationale Veröffentlichungsnummer: WO 2008/022876

(56) Entgegenhaltungen:
- EP-A1- 1 284 347
- EP-A2- 0 886 089
- WO-A-2005/002823
- DE-A1- 2 829 398
- DE-A1- 4 202 437
- DE-B- 1 080 813
- FR-A1- 2 515 303
- US-A- 5 797 589
- US-A1- 2005 017 211

## Beschreibung

Die vorliegende Erfindung betrifft ein Schaltventil zum Steuern einer Gasströmung in einer Gasleitung einer Brennkraftmaschine, insbesondere in einem Kraftfahrzeug, mit den Merkmalen des Oberbegriffs des Anspruchs 1.

Aus der EP 1 498 596 A2 ist ein derartiges Schaltventil bekannt, das eine um eine quer zur Strömungsrichtung verlaufende Drehachse drehverstellbare Klappe zum Steuern eines Strömungsquerschnitts aufweist. Die Klappe ist drehfest an einer Antriebswelle angeordnet, die sich koaxial zur Drehachse erstreckt. In der Schließstellung der Klappe ist radial zwischen einer Dichtkontur der Klappe und einer der Klappe zugewandten Dichtfläche ein Drosseldichtspalt ausgebildet.

Beim bekannten Schaltventil ist zusätzlich ein separates Einlegeteil vorgesehen, das im Inneren der Gasleitung angeordnet ist, durch das sich die Antriebswelle erstreckt, an dem die Dichtfläche ausgebildet ist und dessen Strömungsquerschnitt durch die Klappe gesteuert ist. Desweiteren ist das Einlegeteil zumindest einmalig relativ zur Klappe ausrichtbar, um dadurch den Drosseldichtspalt einstellen zu können. Die Justierung des Drosseldichtspalts bei in die Gasleitung eingesetztem Einlegeteil kann sich vergleichsweise aufwändig gestalten, was für eine Großserienfertigung derartiger Schaltventile nachteilig sein kann.

Ein Schaltventil nach dem Oberbegriff des Anspruchs 1 ist aus DE 4 202 437 A bekannt.

Die vorliegende Erfindung beschäftigt sich mit dem Problem, für ein Schaltventil der eingangs genannten Art eine verbesserte Ausführungsform anzugeben, die sich insbesondere durch einen reduzierten Herstellungsaufwand auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, anstelle eines im Inneren der Gasleitung anzuordnenden Einlegeteils ein Leitungsstück zu verwenden, das axial zwischen einander gegenüberliegenden Leitungsenden anzuordnen ist. Dieses Leitungsstück ist dann von der Antriebswelle der Klappe durchsetzt, weist den von der Klappe gesteuerten Strömungsquerschnitt auf und weist die mit der Dichtkontur der Klappe zur Ausbildung des Drosseldichtspalts zusammenwirkende Dichtfläche auf. Darüber hinaus sind am Leitungsstück außen, an diametral gegenüberliegenden Seiten zwei Lagerschalen angeordnet, die jeweils ein Lager aufweisen, wobei in diesen Lagern die Antriebswelle gelagert ist. Die Erfindung schlägt somit eine Baueinheit vor, die im Rahmen einer Vormontage vollständig vormontierbar ist und im Rahmen einer Endmontage in die jeweilige Gasleitung vergleichsweise einfach eingebaut werden kann. Im Rahmen der Vormontage ist es dabei insbesondere möglich, den gewünschten Drosselspalt einzustellen, was durch die Unabhängigkeit des Leitungsstücks von der übrigen Gasleitung vereinfacht realisierbar ist. Da die Lagerschalen mit den Lagern außen am Leitungsstück angeordnet sind, während gleichzeitig die Dichtfläche und die Klappe innen am Leitungsstück angeordnet sind, kann eine bauliche Trennung zwischen den Komponenten zur Ausbildung des Drosseldichtspalts und den Komponenten zur Positionierung und Lagerung der Antriebswelle realisiert werden. Hierdurch ist es insbesondere möglich, an die unterschiedlichen Funktionen angepasste Materialien und Werkstoffe zu verwenden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Gasleitung mit darin eingesetztem Schaltventil,
- Fig. 2: eine perspektivische Ansicht auf einen Quer- schnitt des Schaltventils,
- Fig. 3 bis 5: jeweils einen Längsschnitt durch das Schalt- ventil im Bereich einer Klappe, bei unter- schiedlichen Ausführungsformen.

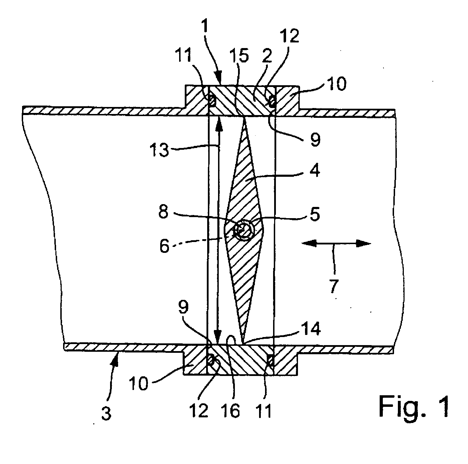

Entsprechend Fig. 1 umfasst ein Schaltventil 1 ein Leitungsstück 2, das im montierten Zustand in eine Gasleitung 3 eingebaut ist. Beim Schaltventil 1 kann es sich grundsätzlich um eine Drosselklappe einer Brennkraftmaschine handeln, wobei es sich dann bei der Gasleitung 3 um eine Frischgasleitung der Brennkraftmaschine handelt. Ebenso kann es sich beim Schaltventil 1 um ein Taktventil handeln, das im wesentlichen nur zwischen zwei Endstellungen (Offenstellung und Schließstellung) umgeschaltet wird. Ein derartiges Taktventil kann beispielsweise in einer Frischgasleitung einer Brennkraftmaschine, insbesondere zur Impulsaufladung oder z.B. zur Entdrosselung von Ottomotoren, angeordnet sein. Die jeweilige Brennkraftmaschine ist dabei vorzugsweise in einem Kraftfahrzeug angeordnet. Von besonderer Bedeutung ist bei derartigen Schaltventilen 1 die Erzielung einer hinreichenden Abdichtung der jeweiligen Gasleitung 3, wenn sich das jeweilige Ventilglied 4, hier eine Klappe, in seiner hier gezeigten Schließstellung befindet. Außerdem soll ein derartiges Schaltventil 1 möglichst verschleißarm arbeiten, wobei zusätzlich die Erzielbarkeit möglichst kurzer Schaltzeiten wünschenswert ist.

Als Schaltglied weist das Schaltventil 1 entsprechend Fig. 1 eine Klappe 4 auf, die drehfest mit einer Antriebswelle 5 verbunden ist. Die Antriebswelle 5 erstreckt sich koaxial zu einer Drehachse 6 und ermöglicht dadurch Drehverstellungen der Klappe 4 um die Drehachse 6. Die Antriebswelle 5 ist auf herkömmliche Weise mit einem nicht dargestellten Stellantrieb verbunden.

Bei einer als, insbesondere diskontinuierlich arbeitende, Schaltklappe ausgebildeten Klappe 4, die zwischen zwei Endstellungen hin und her verstellbar ist, kann der Stellantrieb beispielsweise Drehverstellungen der Klappe 4 um 90° zwischen der gezeigten Schließstellung (erste Endstellung) und einer Offenstellung (zweite Endstellung) ermöglicht, in welcher sich die Klappe 4 parallel zu einer Längsrichtung der Gasleitung 3 bzw. zu einer Strömungsrichtung der in der Gasleitung 3 transportierten Gasströmung erstreckt. Die Längsrichtung der Gasleitung 3 bzw. die Strömungsrichtung der Gasströmung ist in Fig. 1 durch einen mit 7 bezeichneten Doppelpfeil symbolisiert.

Die Welle 5 ist hier beispielhaft als Hohlwelle ausgestaltet und enthält in ihrem Inneren eine stabförmige Torsionsfeder 8, die ihre Neutrallage beispielsweise mittig zwischen den beiden Endlagen, also etwa bei 45° Klappenwinkel aufweist. Der Stellantrieb wirkt über die Antriebswelle 5 mit der Torsionsfeder 8 zur Ausbildung eines Feder-Masse-Schwingungssystems zusammen, was - je nach Einsatzzweck des Schaltventils 1 - die Erzielung extrem kurzer Schaltzeiten, z.B. kleiner als 5ms, ermöglicht.

Bei einer als, insbesondere kontinuierlich arbeitende, Drehklappe ausgebildeten Klappe 4, die quasi ohne Endstellung in der gleichen Drehrichtung rotiert und dabei Phasen mit zunehmendem und mit abnehmendem Öffnungsgrad durchfährt, kann der Stellantrieb beispielsweise Rotationen der Klappe 4, insbesondere mit einstellbarer Geschwindigkeit, bewirken, um in Abhängigkeit der sich dadurch einstellenden Öffnungsphasen und Schließphasen den Volumenstrom durch das Schaltventil 1 einzustellen. Um z.B. die Schließphase einer derartigen Drehklappe zu vergrößern, können als bauliche Maßnahme z.B. seitliche, im Profil kreissegmentartige Ausbuchtungen im Leitungsstück vorgesehen werden, in welche die entsprechend radial vergrößerte Drehklappe beim Drehen für einen vorbestimmten Drehwinkelbereich eintaucht und so den Strömungsquerschnitt verschließt. Innerhalb dieser Schließphase besitzt die Drehklappe quasi unendlich viele Schließstellungen.

Das Leitungsstück 2 ist im gezeigten Einbauzustand axial zwischen zwei Leitungsenden 9 der Gasleitung 3 angeordnet, die sich bezüglich der Längsrichtung 7 fluchtend gegenüberliegen. Die Leitungsenden 9 stehen nicht miteinander in Kontakt, sondern liegen ausschließlich indirekt über das Leitungsstück 2 aneinander an. Für den Einbau des Leitungsstücks 2 können an den Leitungsenden 9 Flanschabschnitte 10 ausgebildet sein, die komplementär zur Außenkontur des Leitungsstücks 2 geformt sind. Zweckmäßig sind die Leitungsenden 9 über die Flanschabschnitte 10 mit Hilfe entsprechender Befestigungselemente, z.B. Schrauben, axial gegen das Leitungsstück 2 verspannt. Zur Erzielung einer gewünschten Abdichtung können axialwirkende Dichtungen 11 vorgesehen sein, die axial zwischen dem Leitungsstück 2 und dem jeweiligen Leitungsende 9 angeordnet sind. Bei den Dichtungen 11 handelt es sich vorzugsweise um Ringdichtungen, insbesondere O-Ringe. Jede Dichtung 11 ist hier in eine Ringnut 12 eingesetzt, die hier jeweils am Leitungsstück 2 ausgebildet ist. Ebenso kann zumindest eine der Ringnuten 12 in einen der Flanschabschnitte 10 des jeweiligen Leitungsendes 9 eingearbeitet sein.

Das Leitungsstück 2 weist innen, also an einer der Gasströmung ausgesetzten Seite einen Strömungsquerschnitt 13 auf. Vorzugsweise ist der Strömungsquerschnitt 13 des Leitungsstücks 2 gleich groß gewählt wie der Strömungsquerschnitt der Gasleitung 3. Grundsätzlich kann das Leitungsstück 2 jedoch auch einen vom Strömungsquerschnitt der Gasleitung 3 abweichenden Strömungsquerschnitt 13 aufweisen.

Die Drehachse 6 der Klappe 4 erstreckt sich senkrecht zur Strömungsrichtung 7. Dementsprechend kann mit Hilfe der Klappe 4 der Strömungsquerschnitt 13 des Leitungsstücks 2 gesteuert werden. In der Schließstellung der Klappe 4 ist der Strömungsquerschnitt 13 mehr oder weniger gesperrt, während er in der Offenstellung der Klappe 4 mehr oder weniger frei ist.

Zur Erzielung der gewünschten Sperrwirkung in der Schließstellung der Klappe 4 arbeitet das Schaltventil 1 mit einem Drosseldichtspalt 14, der in der gezeigten Schließstellung der Klappe 4 radial zwischen einer an der Klappe 4 ausgebildeten Dichtkontur 15 und einer am Leitungsstück 2 ausgebildeten Dichtfläche 16 ausgebildet ist. Die Dichtkontur 15 ist dabei durch eine bezüglich der Drehachse 6 radial außenliegende Kante der Klappe 4 sowie durch bezüglich der Drehachse 6 axiale Stirnseiten der Klappe 4 gebildet. Dabei ist es grundsätzlich möglich, die Dichtkontur 15 im Bereich der axialen Stirnseiten der Klappe 4 kreisbogenförmig um die Antriebswelle 5 herumzuführen, um auch im Bereich der Antriebswelle 5 den gewünschten Drosseldichtspalt 14 auszubilden.

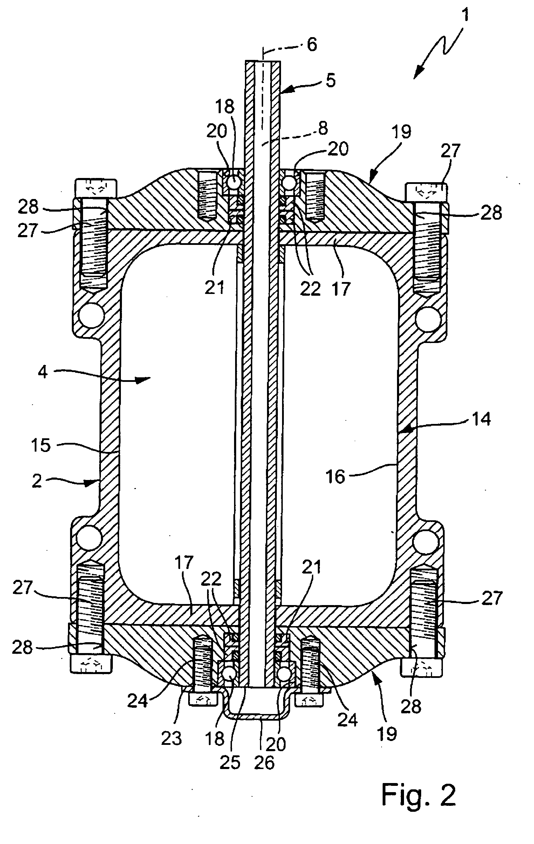

Das Leitungsstück 2, umschließt den mit Hilfe der Klappe 4 steuerbaren Strömungsquerschnitt 13 in Umfangsrichtung vollständig. Dementsprechend ist gemäß Fig. 2 die Antriebswelle 5 so angeordnet, dass sie das Leitungsstück 2 durchsetzt. Beim erfindungsgemäßen Schaltventil 1 ist die Antriebswelle 5 durch zwei einander diametral gegenüberliegende Wandabschnitte 17 des Leitungsstücks 2 hindurchgeführt und im Bereich dieser Wandabschnitte 17 beiderseits des Leitungsstücks 2 in Lagern 18 drehverstellbar gelagert. Bei den Lagern 18 handelt es sich vorzugsweise um Wälzlager, insbesondere um Kugellager. Außerdem ist das Schaltventil 1 mit zwei Lagerschalen 19 ausgestattet, die an diametral gegenüberliegenden Seiten außen, also an einer von der Gasströmung abgewandten Seite des Leitungsstücks 2 am Leitungsstück 2 angeordnet sind. Jede Lagerschale 19 weist eines der Lager 18 auf und enthält hierzu eine entsprechende Lageraufnahme 20. Desweiteren enthält jede Lagerschale 19, hier unmittelbar an die Lageraufnahme 20 axial anschließend, eine Dichtungsaufnahme 21, in die eine Radialdichtung 22 eingesetzt ist. Die jeweilige Radialdichtung 22 ermöglicht eine hinreichende Abdichtung der der Gasströmung ausgesetzten Innenseite gegenüber der Außenseite des Leitungsstücks 2 auch bei drehender Antriebswelle 5. Die jeweilige Radialdichtung 22 ist durch das jeweilige Lager 18 in der Dichtungsaufnahme 21 fixiert, während das jeweilige Lager 18 in der zugehörigen Lageraufnahme 20 durch einen Lagerdeckel 23 fixiert ist. In Fig. 2 ist nur einer dieser Lagerdeckel 23 gezeigt, der mit Hilfe von Schrauben 24 an der zugehörigen Lagerschale 19 befestigt ist. Im Bereich des vom Stellantrieb entfernten freien Endes 25 der Antriebswelle 5 ist außerdem eine topfförmige Abdeckung 26 vorgesehen, die mit Hilfe des Lagerdeckels 23 an der zugehörigen Lagerschale 19 fixiert ist. Innerhalb dieser Abdeckung 26 ist die Antriebswelle 5 mit der in Fig. 2 nicht dargestellten Torsionsfeder 8 drehfest verbunden.

Die Lagerschalen 19 sind bezüglich des Leitungsstücks 2 jeweils als separat hergestellte Bauteile ausgestaltet, die dementsprechend auf geeignete Weise am Leitungsstück 2 befestigt sind. Im Beispiel erfolgt die Befestigung der Lagerschalen 19 am Leitungsstück 2 mit Hilfe von Schrauben 27. Erkennbar liegen die verwendeten Schrauben 27 in einer von der Klappe 4 in deren Schließstellung aufgespannten Klappenebene, in der auch die Drehachse 6 liegt.

Zweckmäßig sind die Lagerschalen 19 und die Lager 18 hinsichtlich ihrer Materialauswahl so aufeinander abgestimmt, dass sie ähnliche Wärmedehnungskoeffizienten aufweisen. Im vorliegenden Zusammenhang sind Wärmedehnungskoeffizienten "ähnlich", wenn sie weniger als 20% voneinander abweichen oder gleich sind. Beispielsweise sind die Lager 18. aus einer Stahllegierung hergestellt, während die Lagerschalen 19 aus einer Leichtmetalllegierung oder ebenfalls aus einer Stahllegierung hergestellt sind. Durch diese Bauweise wird erreicht, dass die Lager 18 im Betrieb des Schaltventils 1, bei dem es zu einer Erwärmung des Schaltventils 1 kommen kann, aufgrund thermisch bedingter Wärmedehnungen innerhalb ihrer Lageraufnahme 20 nicht unzulässig stark verspannt werden und/oder nicht unzulässig großes Spiel bekommen.

Darüber hinaus ist vorgesehen, die Klappe 4 und das Leitungsstück 2 hinsichtlich der Werkstoffauswahl so aufeinander abzustimmen, dass Wärmedehnungseffekte, die bei den im ordnungsgemäßen Betrieb des Schaltventils 1 auftretenden Temperaturen in Erscheinung treten, zu keiner Kontaktierung zwischen Klappe 4 und Leitungsstück 2 führen bzw. nicht zu einer unerwünscht starken Vergrößerung des Drosseldichtspalts 14 führen. Dies wird dadurch erreicht, dass die für die Klappe 4 und das Leitungsstück 2 verwendeten Materialien ähnliche Wärmedehnungskoeffizienten aufweisen. Zum Begriff "ähnlich" wird auf das oben gesagte verwiesen. Hierdurch können unerwünschte Leckagen bzw. Schleifkontakte zwischen der Dichtkontur 15 und der Dichtfläche 16 vermieden werden. Dabei können Klappe 4 und Leitungsstück 2 durchaus aus unterschiedlichen Materialien hergestellt sein. Beispielsweise ist die Klappe 4 bevorzugt ein Kunststoffteil, beispielsweise ein laminiertes Glasfaser- und/oder Kohlefaser-Verbundbauteil. Im Unterschied dazu kann es sich beim Leitungsstück 2 um ein Gussteil aus einer Metalllegierung handeln.

Zusätzlich zur Materialauswahl mit ähnlichen Wärmedehnungskoeffizienten kann zur Vermeidung eines Kontakts zwischen Klappe 4 und Leitungsstück 2 bzw. zur Vermeidung eines zu großen Drosseldichtspalts 14 vorgesehen sein, für die Klappe 4 und das Leitungsstück 2 Werkstoffe auszuwählen, die zu einem möglichst kleinen Wärmedehnungskoeffizienten führen. Im vorliegenden Zusammenhang wird unter einem "kleinen" Wärmedehnungskoeffizienten ein Wärmedehnungskoeffizient verstanden, der maximal 5 x 10⁻⁶/K bei 20°C beträgt. Im Idealfall sollen die Klappe 4 und/oder das Leitungsstück 2 hinsichtlich thermisch bedingter Dehnungen quasi invariant sein. Dabei ist klar, dass ein Wärmedehnungskoeffizient mit dem Wert Null quasi nicht möglich ist, so dass Materialien, die hinsichtlich thermisch bedingter Dehnungen quasi invariant sind, im vorliegenden Zusammenhang einen Wärmedehnungskoeffizienten von maximal etwa 2 x 10⁻⁶/K bei 20°C aufweisen. Beispielsweise kann das Leitungsstücke 2 aus Invar hergestellt werden, dessen Wärmedehnungskoeffizient etwa 1,7 bis 2,0 x 10⁻⁶/K bei 20°C beträgt. Einen ähnlich kleinen Wärmedehnungskoeffizienten kann die Klappe 4 beispielsweise dann aufweisen, wenn sie als Glasfaser-Verbundbauteil hergestellt ist. Durch die kleinen oder minimalen Wärmedehnungskoeffizienten bei Klappe 4 und Leitungsstück 2 wird ebenfalls erreicht, dass sich der Drosseldichtspalt 14 durch sich ändernde Temperaturen im Schaltventil 1 quasi nicht oder nur geringfügig verändert.

Da die Lagerschale 19 und das Leitungsstück 2 separat hergestellte Bauteile sind, können die dafür verwendeten Werkstoffe hinsichtlich der jeweiligen Funktion des jeweiligen Bauteils optimiert werden. Das Leitungsstück 2 dient zusammen mit der Klappe 4 zur Ausbildung des Drosselspalts 14, der über einen möglichst großen Temperaturbereich möglichst invariant sein soll. Im Unterschied dazu dienen die Lagerschalen 19 zusammen mit den darin angeordneten Lagern 18 zur Positionierung bzw. zur Lagerung der Antriebswelle 5. Demnach ist es beim Schaltventil 1 ohne weiteres möglich, die Klappe 4 und das Leitungsstück 2 aus Werkstoffen herzustellen, die einen deutlich anderen, nämlich kleineren, Wärmedehnungskoeffizienten aufweisen, als die für die Herstellung der Lager 18 bzw. für die Herstellung der Lagerschalen 19 verwendeten Werkstoffe.

Um den Drosseldichtspalt 14 z.B. hinsichtlich Spaltlänge und Spaltweite einstellen oder justieren zu können, eröffnet das Schaltventil 1, je nach Ausführungsform, unterschiedliche Möglichkeiten. Beispielsweise kann vorgesehen sein, dass wenigstens eine der Lagerschalen 19 relativ zum Leitungsstück 2 justierbar ausgestaltet ist. Beispielsweise können hierzu in der jeweiligen Lagerschale 19 Durchgangsöffnungen 28, durch welche die Schrauben 27 hindurch gesteckt sind, Radialspiel aufweisen oder als Langlöcher ausgestaltet sein. Vor dem Festziehen der Schrauben 27 kann somit eine Lagejustierung der Drehachse 6 realisiert werden, die sich über die an der Antriebswelle 5 befestigte Klappe 4 auf den Drosselspalt 14 auswirkt. Ebenso ist es grundsätzlich möglich, zumindest eines der Lager 18 relativ zur jeweiligen Lagerschale 19 justierbar auszugestalten. Beispielsweise kann hierzu die jeweilige Lageraufnahme 20 ein entsprechendes Übermaß aufweisen, wodurch es möglich ist, das jeweilige Lager 18 innerhalb der Lageraufnahme 20 auszurichten. Die Lagefixierung des Lagers 18 in der Lageraufnahme 20 erfolgt dann durch eine axiale Verspannung mit Hilfe des Lagerdeckels 23. Durch die Justierung des jeweiligen Lagers 18 kann ebenfalls die Position der Drehachse 6 und folglich der Drosseldichtspalt 14 verändert werden. Ebenso ist es grundsätzlich möglich, die Klappe 4 relativ zur Antriebswelle 5 justierbar auszugestalten, derart, dass die Klappe 4 in ihrer Klappenebene relativ zur Antriebswelle 5 verstellbar ist. Durch die Verstellung der Klappe 4 relativ zur Antriebswelle 5 kommt es gleichzeitig zu einer Verstellung der Klappe 4 relativ zum Leitungsstück 2, wodurch der Drosseldichtspalt 14 einstellbar ist.

Die vorstehenden unterschiedlichen Möglichkeiten zum Einstellen des Drosseldichtspalts 14 können je nach Ausführungsform des Schaltventils 1 alternativ oder kumulativ realisiert sein. Desweiteren ist das Einstellen des Drosseldichtspalts 14 im Rahmen der Vormontage des Schaltventils 1 vorzugsweise als einmaligen Vorgang ausgestaltet, bei dem die einmal gefundene optimale Einstellung des Drosseldichtspalts 14 durch entsprechende Maßnahmen fixiert wird.

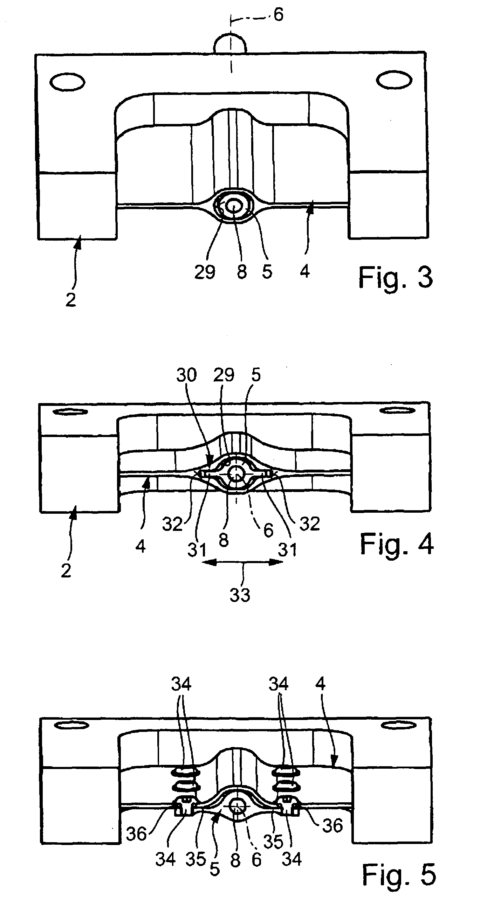

Die Fig. 3 bis 5 zeigen exemplarisch und ohne Beschränkung der Allgemeinheit verschiedene Ausführungsformen zur Realisierung einer Justierbarkeit der Klappe 4 relativ zur Antriebswelle 5 innerhalb der Klappenebene. Bei diesen Ausführungsformen ist die Klappe 4 bezüglich der Antriebswelle 5 als separates Bauteil konzipiert, dass auf geeignete Weise drehfest mit der Antriebswelle 5 verbunden ist.

Entsprechend Fig. 3 weist die Klappe 4 eine koaxial zur Drehachse 6 verlaufende Durchgangöffnung 29 auf, mit deren Hilfe die Klappe 4 auf die Antriebswelle 5 in axialer Richtung aufsteckbar ist. Somit durchdringt die Antriebswelle 5 die Durchgangsöffnung 29. Zur Realisierung der Justierbarkeit der Klappe 4 in der Klappenebene relativ zur Antriebswelle 5, die über ihre Lagerung ortsfest zum Leitungsstück 2 angeordnet ist, kann nun die Durchgangsöffnung 29 einen elliptischen Querschnitt aufweisen. Ebenso sind grundsätzlich auch andere Querschnitte für die Durchgangsöffnung 29 möglich, die eine Relativverstellung zwischen der Klappe 4 und der Antriebswelle 5 in der Klappenebene ermöglichen. Die Klappe 4 ist relativ zur Antriebswelle 5 radial und optional auch axial verstellbar. Sobald die jeweilige optimale Justierung für den Drosseldichtspalt 14 gefunden ist, kann die zugehörige Relativlage zwischen Klappe 4 und Antriebswelle 5 z.B. dadurch fixiert werden, dass ein Hohlraum in der Durchgangsöffnung 29 zwischen der Antriebswelle 5 und der Klappe 4 mit einem aushärtenden Klebstoff oder mit einzuspritzendem Kunststoff oder mit einem Kunstharz oder ähnlichem ausgefüllt wird.

Entsprechend Fig. 4 kann bei einer anderen Ausführungsform ebenfalls eine Vergrößerung der Durchgangsöffnung 29 in Richtung der Klappenebene vorgesehen sein, um dadurch eine Beweglichkeit der Klappe 4 in der Klappenebene relativ zur Antriebswelle 5 zu ermöglichen. Beispielsweise wieder durch einen elliptischen Querschnitt. Zusätzlich ist zwischen der Klappe 4 und der Antriebswelle 5 eine Nut-Feder-Kopplung 30 ausgebildet, die ebenfalls in der Klappenebene liegt, dadurch Relativverstellungen zwischen Klappe 4 und Antriebswelle 5 in der Klappenebene zulässt, gleichzeitig jedoch eine drehfeste mechanischen Kopplung durch Formschluss zwischen der Klappe 4 und der Antriebswelle 5 schafft. Die Nut-Feder-Kopplung 30 umfasst hier zwei Federabschnitte 31, die in der Klappenebene an diametral gegenüberliegenden Seiten von der Antriebswelle 5 radial abstehen und sich in deren Längsrichtung erstrecken. Die zugehörigen Nuten 32 sind in die Klappe 4 eingearbeitet und bilden seitliche Aussparungen innerhalb der Durchgangsöffnung 29. Die Nuten 32 erstrecken sich komplementär zu den Federabschnitten 31, nämlich in der Klappenebene. Die bezüglich der Drehachse 6 radiale Verstellbarkeit zwischen Klappe 4 und Antriebswelle 5 ist in Fig. 4 durch einen Doppelpfeil 33 angedeutet. Es ist klar, dass die Klappe 4 relativ zur Antriebswelle 5 auch parallel zur Drehachse 6 justierbar sein kann.

Bei der in Fig. 5 gezeigten Ausführungsform ist die Klappe 4 mit Hilfe von Befestigungselementen 34 an der Antriebswelle 5 befestigt. Die Antriebswelle 5 weist hierzu an zwei sich diametral gegenüberliegenden Seiten stegartige Anbindungsabschnitte 35 auf, die sich parallel zur Klappenebene, jedoch beabstandet dazu erstrecken. Die Klappe 4 ist so auf die Anbindungsabschnitte 35 aufgesetzt und mit Hilfe der Befestigungselemente 34 an den Anbindungsabschnitten 35 befestigt, dass sich die Klappe 4 in der die Drehachse 6 enthaltenden Klappenebene erstreckt. Beispielsweise handelt es sich bei den Befestigungselementen 34 um Schrauben oder um Nieten, die jeweils eine Durchgangsöffnung 36 in der Klappe 4 durchdringen. Die Durchgangsöffnungen 36 können gegenüber den jeweiligen Befestigungselement 34 Radialspiel aufweisen, wodurch sich die gewünschte Justierbarkeit der Klappe 4 relativ zur Antriebswelle 5 ergibt. Beispielsweise sind die Durchgangsöffnungen 36 als Langlöcher ausgestaltet. Bei gefundener optimaler Relativlage zwischen Klappe 4 und Antriebswelle 5, also bei optimal eingestelltem Drosseldichtspalt 14 wird mit Hilfe der Befestigungselemente 34 die gefundene Relativlage fixiert.

Zum Auffinden der optimalen Einstellung des Drosseldichtspalts 14 ist es insbesondere möglich, abrasive Beschichtungen an der Dichtkontur 15 und/oder an der Dichtfläche 16 anzubringen, wie dies beispielsweise in der eingangs genannten EP 1 498 596 A2 vorgeschlagen wird.

Alternativ zu den genannten Justagemöglichkeiten zum Einstellen eines optimalen Drosseldichtspalts 14 gibt es im Rahmen der Herstellung des Schaltventils 1 weitere Möglichkeiten, den Drosseldichtspalt 14 mit gewünschten Abmessungen herzustellen. So kann beispielsweise zunächst die Klappe 4 vorgefertigt werden, wobei sie insbesondere im Bereich ihrer Dichtkontur 15 noch nicht ihre entgültige Form aufweist. Die insoweit unfertige Klappe 4 wird im Leitungsstück 2 positioniert, z.B. durch die ordnungsgemäße Montage der Antriebswelle 5 mit daran befestigter Klappe 4. Die Positionierung der Klappe 4 im Leitungsstück 2 erfolgt in einer vorbestimmten Relativlage oder Solllage. Hierbei sind Klappe 4 und Leitungsstück 2 so aufeinander abgestimmt, dass in diesem Ausgangszustand in radialer Richtung zwischen der Dichtkontur 15 und der Dichtfläche 16 ein Abstand vorliegt, der gegenüber dem noch herzustellenden Drosseldichtspalt 14 bzw. gegenüber dessen Spaltweite verkleinert ist, insbesondere kann die Dichtkontur 15 zumindest bereichsweise die Dichtfläche 16 berühren und/oder sogar überlappen. Unter Beibehaltung dieser Solllage zwischen Klappe 4 und Leitungsstück 2 wird durch Bearbeitung der Dichtkontur 15 und/oder der Dichtfläche 16 der Drosseldichtspalt 14 hergestellt. Beispielsweise wird der Drosseldichtspalt 14 durch Beschneiden der Dichtkontur 15 und/oder Dichtfläche 16 freigeschnitten. Denkbar ist beispielsweise ein Laserschneidverfahren oder ein Wasserstrahlschneidverfahren.

Bei einer anderen Ausführungsform kann die Klappe 4 beispielweise durch Spritzgießen, insbesondere aus Kunststoff, hergestellt werden. Dabei kann die Dichtfläche 16 in einem Gießwerkzeug zum Spritzgießen der Klappe 4 einen Wandabschnitt bilden, der zur Begrenzung der Dichtkontur 15 dient. Vorzugweise lassen sich Gießparameter, wie Temperatur und Druck, und der Klappenwerkstoff so wählen, dass der Drosseldichtspalt 14 beim Erstarren des gespritzten Klappenwerkstoffs von selbst entsteht, und zwar durch Schwindung des erkaltenden Klappenwerkstoffs.

Alternativ kann auch die Dichtfläche 16 durch Spritzgießen hergestellt werden, wobei dann die Klappe 4 bzw. deren Dichtkontur 15 in einem Gießwerkzeug zum Spritzgießen der Dichtfläche 16 einen Wandabschnitt bildet, der zur Begrenzung der Dichtfläche 16 dient. Auch hierbei lassen sich dann die Gießparameter und der verwendete Werkstoff so wählen, dass der Drosseldichtspalt 14 beim Erstarren von selbst entsteht.

Bei einer weiteren Variante kann die vorgefertigte, jedoch noch nicht endfertige Klappe 4 in einer vorbestimmten Relativlage oder Solllage im Leitungsstück 2 positioniert werden, z.B. durch Montage der damit fest verbundenen Antriebswelle 5. Die unfertige Klappe 4 und das Leitungsstück 2 sind dabei vorzugsweise so aufeinander abgestimmt, dass in diesem Ausgangszustand zwischen der Dichtkontur 15 und der Dichtfläche 16 ein Abstand vorliegt, der gegenüber dem noch herzustellenden Drosseldichtspalt 14 bzw. dessen Spaltweite vergrößert ist. Die so positionierte Klappe 4 kann nun durch gezieltes Erwärmen und plastischen Verformen endgeformt werden, derart, dass sich ein Klappenrand in Richtung der Dichtfläche 16 bewegt. Mit diesem Umformvorgang wird gleichzeitig der Drosseldichtspalt 14 ausgebildet. Ein derartiger Umformvorgang kann beispielsweise durch sogenanntes Heißpressen realisiert werden. Ebenso ist es möglich, die Erwärmung des zu verformenden Abschnitts mittels Ultraschall durchzuführen. Desweiteren ist es grundsätzlich möglich, das Leitungsstück 2 so auszugestalten, dass es als Stanzwerkzeug zum Ausstanzen der Klappe 4 aus einem Bahnenmaterial verwendbar ist. Das Leitungsstück 2 weist dann eine entsprechende Schneidkante auf. Zusätzlich kann dann am Leitungsstück 2 eine auf die Schneidkante folgende Querschnittserweiterung ausgebildet sein, die so dimensioniert ist, dass die mit dem Leitungsstück 2 ausgestanzte Klappe 4 im vorgesehenen Dichtungsquerschnitt dann den gewünschten Drosseldichtspalt 14 gegenüber der Dichtfläche 16 automatisch ausbildet.

## Patentansprüche

1. Schaltventil zum Steuern einer Gasströmung in einer Gasleitung (3) einer Brennkraftmaschine, insbesondere in einem Kraftfahrzeug,
- mit einer um eine quer zur Strömungsrichtung (7) verlaufende Drehachse (6) drehverstellbaren Klappe (4) zum Steuern eines Strömungsquerschriitts (13),
- mit einem Drosseldichtspalt (14), der in einer Schließstellung der Klappe (4) radial zwischen einer Dichtkontur (15) der Klappe (4) und einer der Klappe (4) zugewandten Dichtfläche (16) ausgebildet ist,
- mit einer sich koaxial zur Drehachse (6) erstreckenden Antriebswelle (5), an der die Klappe (4) drehfest angeordnet ist,
- wobei ein Leitungsstück (2) zum Einbau in die Gasleitung (3) axial zwischen einander gegenüberliegenden Leitungsenden (9) vorgesehen ist,
- wobei die Klappe (4) den Strömungsquerschnitt (13) des Leitungsstücks (2) steuert,
- wobei die Dichtfläche (16) am Leitungsstück (2) ausgebildet ist,
- wobei die Antriebswelle (5) das Leitungsstück (2) durchsetzt und in wenigstens zwei beiderseits des Leitungsstücks (2) angeordneten Lagern (18) drehverstellbar gelagert ist,
- wobei zwei Lagerschalen (19) vorgesehen sind, die bezüglich des Strömungsquerschnitts (13) außen am Leitungsstück (2) an einander diametral gegenüberliegenden Seiten angeordnet sind und die jeweils eines der Lager (18) aufweisen,
**dadurch gekennzeichnet,**
- **dass** die Lagerschalen (19) bezüglich des Leitungsstücks (2) als separate Bauteile ausgestaltet sind, die am Leitungsstück (2) befestigt sind,
- **dass** die Lagerschalen (19) und die Lager (18) ähnliche Wärmedehnungskoeffizienten aufweisen,
- **dass** die Klappe (4) und das Leitungsstück (2) ähnliche Wärmedehnungskoeffizienten aufweisen,
- **dass** die Klappe (4) einen anderen Wärmedehnungskoeffizienten aufweist als die Lager (18) und als die Lagerschalen (19),
- **dass** das Leitungsstück (2) einen anderen Wärmedehnungskoeffizienten aufweist als die Lager (18) und als die Lagerschalen (19).

2. Schaltventil nach Anspruch 1,
**dadurch gekennzeichnet,**
**dass** die Klappe (4) und/oder das Leitungsstück (2) einen kleinen Wärmedehnungskoeffizienten aufweist/aufweisen oder hinsichtlich thermisch bedingter Dehnungen quasi invariant ist/sind.

3. Schaltventil nach einem der Ansprüche 1 und 2,
**dadurch gekennzeichnet,**
- **dass** zumindest eine der Lagerschalen (19) relativ zum Leitungsstück (2) zum Einstellen des Drosseldichtspalts (14) justierbar ausgestaltet ist, und/oder
- **dass** zumindest eines der Lager (18) relativ zur jeweiligen Lagerschale (19) zum Einstellen des Drosseldichtspalts (14) justierbar ausgestaltet ist.

4. Schaltventil nach einem der Ansprüche 1 bis 3,
**dadurch gekennzeichnet,**
**dass** die Klappe (4) relativ zur Antriebswelle (5) zum Einstellen des Drosseldichtspalts (14) in einer die Drehachse (6) enthaltenden Klappenebene justierbar ausgestaltet ist.

5. Schaltventil nach den Ansprüchen 1 bis 4,
**dadurch gekennzeichnet,**
- **dass** die Klappe (4) ein separat von der Antriebswelle (5) hergestelltes Bauteil ist, und/oder
- **dass** die Klappe (4) an die Antriebswelle (5) angebaut ist.

6. Schaltventil nach den Ansprüchen 1 bis 5,
**dadurch gekennzeichnet,**
- **dass** der Drosseldichtspalt (14) durch Bearbeitung der Dichtkontur (15) und/oder der Dichtfläche (16) hergestellt ist, oder
- **dass** der Drosseldichtspalt (14) durch Schwindung der bis an die Dichtfläche (16) angespritzten Klappe (4) gebildet ist, oder
- **dass** der Drosseldichtspalt (14) durch Erwärmen und plastisches verformen der Klappe (4) mit radialer Ausdehnung hergestellt ist.

## Claims

1. A control valve for controlling a gas flow in a gas line (3) of an internal combustion engine, in a motor vehicle in particular,
- having a flap (4), which is rotationally adjustable about an axis of rotation (6) running transversely to the direction of flow (7), for controlling a flow cross section (13),
- having a throttling sealing gap (14) which, in a closed position of the flap (4), is formed radially between a sealing contour (15) of the flap (4) and a sealing surface (16) opposite the flap (4),
- having a drive shaft (5), which extends coaxially to the axis of rotation (6), on which the flap (4) is arranged in a rotationally-fixedly manner,
- wherein a line section (2) is provided for installation in the gas line (3) axially between line ends (9) that are positioned opposite one another,
- wherein the flap (4) controls the flow cross section (13) of the line section (2),
- wherein the sealing surface (16) is configured on the line section (2),
- wherein the drive shaft (5) penetrates the line section (2) and is mounted in a rotationally-adjustable manner in at least two bearings (18) arranged on both sides of the line section (2),
- wherein two shell bearings (19) are provided, which are arranged with respect to the cross section of flow (13) outside on the line section (2) on sides that are diametrically opposite one another, that respectively have one of the bearings (18),
**characterised in that**
- with respect to the line section (2), the shell bearings (19) are configured as separate components that are attached on the line section (2),
- the shell bearings (19) and the bearings (18) exhibit similar coefficients of heat expansion,
- the flap (4) and the line section (2) exhibit similar coefficients of heat expansion,
- the flap (4) exhibits a different coefficient of heat expansion from the bearings (18) and from the shell bearings (19),
- the line section (2) exhibits a different coefficient of heat expansion from the bearings (18) and from the shell bearings (19).

2. The control valve as specified in claim 1,
**characterised in that**
the flap (4) and/or the line section (2) has/have a smaller coefficient of heat expansion or is/are virtually invariant with regard to heat-related expansion.

3. The control valve as specified in claim 1 or claim 2,
**characterised in that**
- at least one of the shell bearings (19) is configured as adjustable relative to the line section (2) for adjusting the throttling sealing gap (14), and/or
- at least one of the bearings (18) is configured as adjustable relative to the shell bearings (19) for adjusting the throttling sealing gap (14).

4. The control valve as specified in any one of the claims 1 to 3,
**characterised in that**
the flap (4) is configured as adjustable relative to the drive shaft (5) for adjusting the throttling sealing gap (14) in one of the flap planes containing the axis of rotation (6).

5. The control valve as specified in any one of the claims 1 to 4,
**characterised in that**
- the flap (4) is a component manufactured separately from the drive shaft (5), and/or
- the flap (4) is attached on the drive shaft (5).

6. The control valve as specified in any one of the claims 1 to 5,
**characterised in that**
- the throttling sealing gap (14) is manufactured by machining the sealing contour (15) and/or the sealing surface (16), or
- the throttling sealing gap (14) is formed by mould shrinkage of the flap (4) that is extruded up to the sealing surface (16), or
- the throttling sealing gap (14) is manufactured by heating and plastically deforming the flap (4) with radial expansion.

## Revendications

1. Soupape de commande pour commander un écoulement de gaz dans une conduite de gaz (3) d'un moteur à combustion interne, notamment dans un véhicule automobile,
- comportant un clapet (4) réglable rotativement autour d'un axe de rotation (6) s'étendant transversalement à la direction d'écoulement (7) pour commander une section transversale d'écoulement (13),
- comportant un interstice d'étanchéité restricteur (14), qui est réalisé dans une position de fermeture du clapet (4) radialement entre un contour d'étanchéité (15) du clapet (4) et une surface d'étanchéité (16) tournée vers le clapet (4),
- comportant un arbre d'entraînement (5) s'étendant coaxialement à l'axe de rotation (6), sur lequel le clapet est disposé de manière solidaire en rotation (4),
- dans laquelle une pièce de conduction (2) à intégrer dans la conduite de gaz (3) axialement entre des extrémités de conduite (9) en vis-à-vis l'une de l'autre est prévue,
- dans laquelle le clapet (4) commande la section transversale d'écoulement (13) de la pièce de conduction (2),
- dans laquelle la surface d'étanchéité (16) est réalisée sur la pièce de conduction (2),
- dans laquelle l'arbre d'entraînement (5) traverse la pièce de conduction (2) et est positionné de manière réglable rotativement dans au moins deux paliers (18) disposés des deux côtés de la pièce de conduction (2),
- dans laquelle deux coussinets de palier (19) sont prévus, lesquels sont disposés par rapport à la section transversale d'écoulement (13) à l'extérieur sur la pièce de conduction (2) à des emplacements diamétralement en vis-à-vis l'un de l'autre et présentent respectivement un des paliers (18),
**caractérisée en ce que**
- les coussinets de palier (19) sont réalisés comme des composants séparés par rapport à la pièce de conduction (2), lesquels sont fixés sur la pièce de conduction (2),
- les coussinets de palier (19) et les paliers (18) présentent des coefficients de dilatation thermique similaires,
- le clapet (4) et la pièce de conduction (2) présentent des coefficients de dilatation thermique similaires,
- le clapet (4) présente un autre coefficient de dilatation thermique que les paliers (18) et les coussinets de palier (19),
- la pièce de conduction (2) présente un autre coefficient de dilatation thermique que les paliers (18) et que les coussinets de palier (19).

2. Soupape de commande selon la revendication 1,
**caractérisée en ce que**
le clapet (4) et/ou la pièce de conduction (2) présente/présentent un coefficient de dilatation thermique plus petit ou est/sont quasi invariants en terme de dilatations thermiques.

3. Soupape de commande selon une des revendications 1 et 2,
**caractérisée en ce que**
- au moins un des coussinets de palier (19) est réalisé de manière ajustable relativement à la pièce de conduction (2) afin de régler l'interstice d'étanchéité restricteur (14), et/ou
- au moins un des paliers (18) est réalisé de manière ajustable relativement aux coussinets de palier respectifs (19) afin de régler l'interstice d'étanchéité restricteur (14).

4. Soupape de commande selon une des revendications 1 à 3,
**caractérisée en ce que**
le clapet (4) est réalisé de manière ajustable relativement à l'arbre d'entraînement (5) afin de régler l'interstice d'étanchéité restricteur (14) dans un plan de clapet contenant l'axe de rotation (6).

5. Soupape de commande selon les revendications 1 à 4,
**caractérisée en ce que**
- le clapet (4) est un composant fabriqué séparément de l'arbre d'entraînement (5), et/ou
- le clapet (4) est intégré à l'arbre d'entraînement (5).

6. Soupape de commande selon les revendications 1 à 5,
**caractérisée en ce que**
- l'interstice d'étanchéité restricteur (14) est fabriqué par usinage du contour d'étanchéité (15) et/ou de la surface d'étanchéité (16), ou
- l'interstice d'étanchéité restricteur (14) est formé par retrait du clapet (4) moulé par injection sur la surface d'étanchéité (16), ou
- l'interstice d'étanchéité de fente (14) est fabriqué par chauffage et déformation plastique du clapet (4) avec dilatation radiale.
